# EUROPEAN PATENT APPLICATION

(11) **EP 2 797 002 A1**
(43) Date of publication of application: **29.10.2014**
(21) Application number: 12861031.8
(22) Date of filing: 13.12.2012
(51) Int. Cl.: G06F 12/00

(54) **DATA PROCESSING DEVICE, DATA TRANSMISSION DEVICE, DATA PROCESSING SYSTEM, DATA PROCESSING METHOD, AND DATA TRANSMISSION METHOD**

(30) Priority: 21.12.2011 JP 2011279424
(71) Applicant: Panasonic Corporation, Kadoma-shi, Osaka 571-8501 (JP)
(72) Inventor: YAMAGUCHI, Koichiro, c/o Panasonic Corporation, 7F OBP Panasonic Tower, 2-1-61 Shiromi, Chuo-ku Osaka 540-6207 (JP); SHINOHARA, Hiroki, c/o Panasonic Corporation, 7F OBP Panasonic Tower, 2-1-61 Shiromi, Chuo-ku Osaka 540-6207 (JP); SHIBATA, Ken-ichi, c/o Panasonic Corporation, 7F OBP Panasonic Tower, 2-1-61 Shiromi, Chuo-ku Osaka 540-6207 (JP)
(74) Representative: Vigand, Philippe
(86) International application number: PCT/JP2012/007966
(87) International publication number: WO 2013/094159

(57) **Abstract**

Provided is a data processing device including: an acquisition unit (1711) which acquires a message and a threshold amount of time for the message; a display unit (1712) which displays the message; a user interface (1713) which receives instructions for selection of the displayed message; and a management unit (1714) which manages the message as a read message, irrespective of whether the user interface (1713) has received the instructions, when a threshold amount of time has elapsed since the message is displayed on the display unit (1714).

## Description

### [Technical Field]

The present disclosure relates to a data processing device, a data transmission device, a data processing system, a data processing method, and a data transmission method.

### [Background Art]

Patent Literature (PTL) 1 discloses a technique of manually setting whether a user is finished reading data (whether data is marked as read), and erasing the data when all users who may see the data are finished reading the data. The technique can eliminate the inconvenience that the data the users are finished reading is displayed again.

### [Citation List]

### [Patent Literature]

[PTL 1] Japanese Unexamined Patent Application Publication No. H10-275102

### [Summary of Invention]

### [Technical Problem]

The present disclosure discloses a data processing device which properly determines whether a message is in a read state.

### [Solution to Problem]

A data processing device according to the present disclosure includes: an acquisition unit which acquires a message and a threshold amount of time for the message; a display unit which displays the message; a user interface which receives an instruction for selection of the displayed message; and a management unit which manages the message as a read message, irrespective of whether the user interface has received the instruction for the selection, when the threshold amount of time has elapsed since the message is displayed on the display unit.

### [Advantageous Effects of Invention]

The data processing device according to the present disclosure can properly determine whether a message is in a read state.

### [Brief Description of Drawings]

[FIG. 1A] FIG. 1A is a diagram showing a first example of the configuration of a data processing system.
[FIG. 1B] FIG. 1B is a diagram illustrating processing between a server and a data processing device in the first example of the data processing system.
[FIG. 2] FIG. 2 is a hardware block diagram showing example hardware configuration of the data processing device.
[FIG. 3] FIG. 3 is a diagram showing a first example of a message list screen displayed by the data processing device.
[FIG. 4] FIG. 4 is a diagram showing a second example of the message list screen displayed by the data processing device.
[FIG. 5] FIG. 5 is a diagram showing a third example of the message list screen displayed by the data processing device.
[FIG. 6] FIG. 6 is a diagram showing an example of a message screen displayed by the data processing device.
[FIG. 7] FIG. 7 is a diagram logically showing a message display switch on the message list screen displayed by the data processing device.
[FIG. 8] FIG. 8 is a functional block diagram showing the functional block configuration of a server in the data processing system.
[FIG. 9] FIG. 9 is a functional block diagram showing a first example of the functional block configuration of the data processing device.
[FIG. 10] FIG. 10 is a first flowchart illustrating operation of the server in the data processing system.
[FIG. 11] FIG. 11 is a second flowchart illustrating operation of the server in the data processing system.
[FIG. 12] FIG. 12 is a third flowchart illustrating operation of the server in the data processing system.
[FIG. 13] FIG. 13 is a flowchart illustrating a process for automatically determining whether a message has been read, performed by the data processing device.
[FIG. 14] FIG. 14 is a flowchart illustrating processing performed by the data processing device when the data processing device receives a read flag.
[FIG. 15] FIG. 15 is a diagram showing an example of message display by the data processing device.
[FIG. 16A] FIG. 16A is a diagram showing a second example of the configuration of the data processing system.
[FIG. 16B] FIG. 16B is a diagram illustrating processing between a server, a data processing device, and a mobile terminal in the second example of the data processing system.
[FIG. 17A] FIG. 17A is a functional block diagram showing a second example of the configuration of the data processing device.
[FIG. 17B] FIG. 17B is a functional block diagram showing a third example of the configuration of the data processing device.

### [Description of Embodiment]

Hereinafter, a non-limiting embodiment will be described in detail with reference to the accompanying drawings. However, unnecessarily detailed description may be omitted. For example, detailed description of well-known matters or description previously set forth with respect to components that are substantially the same may be omitted. This is to avoid unnecessarily redundancy in the description below and for facilitating an understanding by those skilled in the art.

It should be noted that the inventors provide the accompanying drawings and the description below for a thorough understanding of the present disclosure by those skilled in the art, and the accompanying drawings and the description are not intended to be limiting the subject matter recited in the claims appended hereto.

First, a problem to be solved by the present disclosure will be described in detail.

In recent years, with the growing popularity of digital devices, various pieces of information are delivered to user-owned digital devices. An information provider may send a notification message to the digital device. In that case, the notification message sent to the digital device is forcibly displayed on the digital device. Furthermore, the information provider can not only send a notification message, but also hold the sent notification message at a server of the information provider, so that the user can later read the notification message. However, a large amount of messages may be transmitted. In that case, a display priority level of a message once read by a user is downgraded when the user later reads the message. Thus, reading inconvenience can be reduced.

PTL 1 discloses a technique of manually setting whether a user is finished reading data (whether data is marked as read), and erasing the data when all users who may see the data are finished reading the data. The technique can eliminate the inconvenience that the data the user is finished reading is displayed again.

In the method disclosed in PTL 1, however, since read determination is manually set by the user, the operation itself is inconvenient to the user. There is a method in which whether a message has been read is automatically determined. It is common for such a method that a message is determined as read once the message is displayed for a period of time. The method is, however, not effective because there are several different types of messages, and a time required for a message to be read depends on a user.

The present disclosure discloses the data processing device which properly determines whether a message is in a read state.

To solve the above problems, a data processing device according to one aspect of the present disclosure includes: an acquisition unit which acquires a message and a threshold amount of time for the message; a display unit which displays the message; a user interface which receives an instruction for selection of the displayed message; and a management unit which manages the message as a read message, irrespective of whether the user interface has received the instruction for the selection, when the threshold amount of time has elapsed since the message is displayed on the display unit.

According to the above configuration, the data processing device can manage, as a read message, a message a threshold amount of time, acquired together with the message, for which has elapsed since the message is displayed. Thus, the data processing device can properly determine whether the message is in the read state.

Moreover, for example, the data processing device includes: an acquisition unit which acquires a message and a property of the message; a setting unit which sets a threshold amount of time for the message, based on the acquired property; a display unit which displays the message; a user interface which receives an instruction for selection of the displayed message; and a management unit which manages the message as a read message , irrespective of whether the user interface has received the instruction for the selection, when the threshold amount of time has elapsed since the message is displayed on the display unit.

According to the above configuration, the data processing device can manage, as a read message, a message a threshold amount of time for which has elapsed since the message is displayed. Here, the threshold amount of time is a value calculated from a property of the message acquired together with the message. Thus, the data processing device can properly determine whether the message is in the read state.

Moreover, for example, the data processing device includes: a timer which counts, for each of a plurality of the messages having the property of a same type, a selection time which is a time from when the message is displayed on the display unit to when the message is selected by using the user interface; and a transmission unit which transmits information on the counted selection time.

According to the above configuration, based on a selection time from when a message is displayed to when a user selects the message via the user interface, the threshold amount of time which is acquired by the acquisition unit can be set. In other words, the threshold amount of time can be set based on a selection time dependent on the property of a message.

Moreover, for example, the data processing device includes: a timer which counts, for each of a plurality of the messages having the property of a same type, selection time which is a time from when the message is displayed on the display unit to when the message is selected by using the user interface; and an adjustment unit which adjusts a length of the threshold amount of time set by the setting unit, based on the counted selection time.

According to the above configuration, based on the selection time which is a time from when a message is displayed to when a user selects the message via the user interface, the threshold amount of time which is acquired by the acquisition unit can be set. Furthermore, the length of the selection time can be adjusted in accordance with the property of a message.

Moreover, for example, the display unit displays the message managed as the read message by the management unit in a display mode different from a display mode of the message other than the read message.

According to the above configuration, the user can intuitively know a message determined as in the read state by the data processing device, based on a display mode of the message in the data processing device.

Moreover, for example, the display unit further displays a time which has elapsed since the display unit displays the message.

According to the above configuration, the user can know, by the message display, a time until the message is determined to be in the read state by the data processing device.

Moreover, for example, the data processing device includes: a read estimation time calculation unit which calculates, as a read estimation time, based on complexity of a first message, an estimated time from when the first message is displayed to when the first message is in a read state; and a transmission unit which transmits the read determination time calculated by the read estimation time calculation unit, and the first message.

According to the above configuration, by using several number of correspondence between the message selection time and the message complexity, the data processing device can accurately obtain the read estimation time for a new message (a second message) having complexity that has not previously been received by the data processing device. In addition, the server performs a process for calculating the read estimation time for the new message, from the correspondence between the selection time and the complexity. Thus, processing load on the data processing device can be reduced.

Moreover, the data transmission device according to one aspect of the present disclosure further includes a reception unit which receives identification information of a user, identification information of a second message, and a selection time which is a time from when the second message is displayed to when the second message is selected by the user, wherein the read estimation time calculation unit further calculates, for each user, read estimation information indicating correspondence between the selection time received by the reception unit and complexity calculated based on the identification information of the second message, and based on the calculated read estimation information and the complexity of the first message, calculates the read estimation time for each user, and the transmission unit further transmits the read estimation time calculated for each user by the read estimation time calculation unit and the first message.

According to the above configuration, the data transmission device transmits to a terminal a message and the read estimation time for the message. Using the message and the read estimation time, the terminal can display the received message and set the state of the message to the read state when the read estimation time has elapsed since the message is displayed. Thus, the data transmission device can allow the terminal to properly determine whether the message is in the read state.

Moreover, the data processing system according to one aspect of the present disclosure is a data processing system including the data transmission device and a terminal, the terminal including: a reception unit which receives the read estimation time and the first message from the data transmission device; a display unit which displays the first message; a timer which counts a time since the first message is selectable by the display unit displaying the first message; and a read determination unit which determines whether the first message is in a read state, based on whether a time which has elapsed since the display unit displays the first message has exceeded the read estimation time acquired by the acquisition unit.

According to the above configuration, by using several correspondences between the selection time and the message complexity, the data transmission device can accurately obtain the read estimation time for a new message which has complexity that has not previously been received by the data processing device. By transmitting the read estimation time to the terminal, the data transmission device can allow the terminal to properly determine whether the message is in the read state.

Moreover, a data processing method according to one aspect of the present disclosure includes: (a) acquiring a message and a threshold amount of time for the message; (b) displaying the message; (c) receiving an instruction for selection of the displayed message; and (d) managing the message as a read message, irrespective of whether the instruction for the selection has been received in step (c), when the threshold amount of time has elapsed since the message is displayed in step (b).

According to the above configuration, the same advantageous effects as obtained by the above data transmission device are achieved.

Moreover, the data transmission method according to one aspect of the present disclosure includes: (a) calculating as a read estimation time an estimated time from when the first message is displayed to when the message is in a read state, based on complexity of a first message; and transmitting the read determination time calculated in step (a) and the first message.

According to the above configuration, the same advantageous effects as obtained by the above data transmission device are achieved.

Moreover, a program according to one aspect of the present disclosure is a program for causing a computer to execute the data processing method.

According to the above configuration, the same advantageous effects as obtained by the above data processing device are achieved.

Moreover, a program according to one aspect of the present disclosure is a program for causing a computer to execute the data transmission method.

According to the above configuration, the same advantageous effects as obtained by the above data transmission device are achieved.

Hereinafter, the embodiment according to the present disclosure will be described, with reference to the accompanying drawings.

### (Embodiment)

Hereinafter, the data processing device according to the present disclosure will be described.

### [1-1. Configuration]

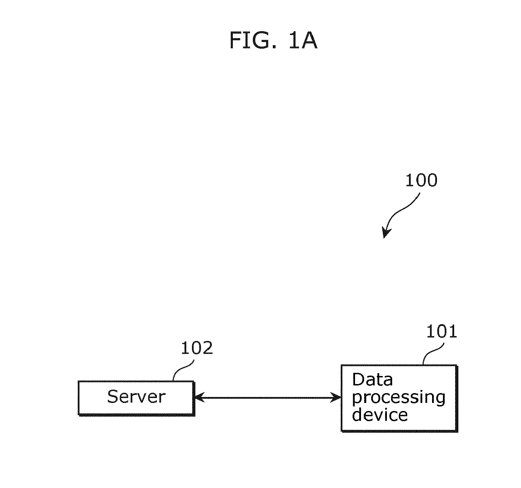

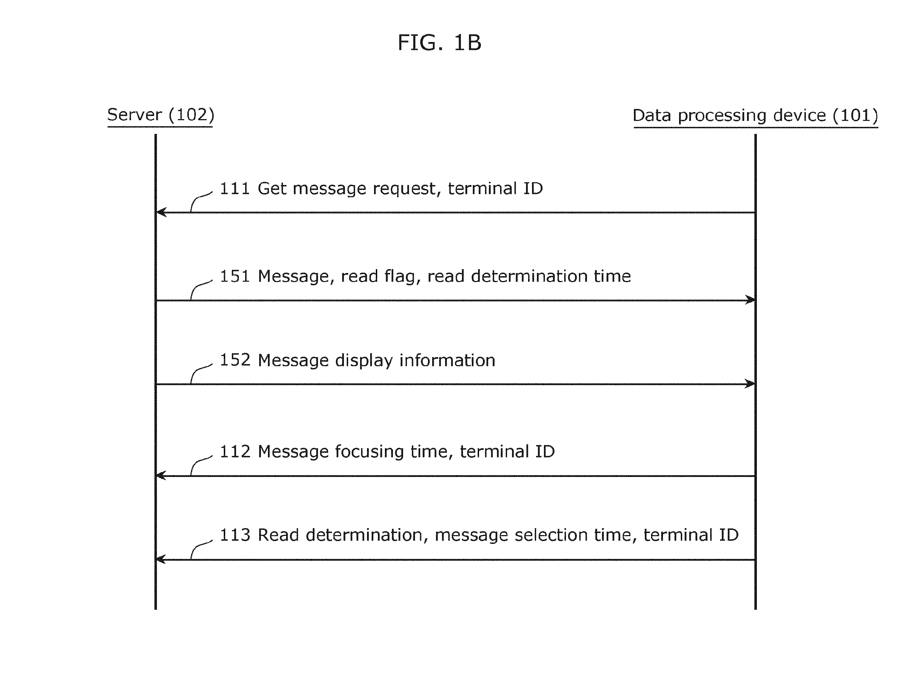

FIG. 1A is a diagram showing a first example of the configuration of a data processing system 100. FIG. 1B is a diagram illustrating processing between a server and a data processing device in a first example of the data processing system 100.

A data processing device 101 makes a get message request 111 to the server 102. Here, the data processing device 101 also transmits a terminal ID which is information whereby the own data processing device is identifiable, as well as making the get message request 111. Since the data processing device 101 transmits the terminal ID upon making the get message request 111, a secure communication scheme may be employed to prevent spoofing or the like.

Once received the get message request 111 from the data processing device 101, the server 102 transmits to the data processing device 101 a message 151 corresponding to the data processing device 101. The server 102 also transmits the read flag and a read determination time (also referred to as a read estimation time), as well as transmitting the message 151. It should be noted that the read determination time may not necessarily be transmitted. Moreover, multiple numbers of the messages 151 may be transmitted. Furthermore, the server 102 transmits message display information 152 which is information regarding how the message 151 is displayed on the screen, as well as transmitting the message 151.

The data processing device 101 receives the message 151 transmitted from the server 102, and displays the message 151 according to the message display information 152. The data processing device 101 transmits to the server 102 a message focusing time 112 which is a time period for which the message 151 is being focused by the remote controller operation. The data processing device 101 transmits a terminal ID which is information whereby the own data processing device 101 is identifiable, as well as transmitting the message focusing time 112. Since the data processing device 101 transmits the terminal ID when transmitting the message focusing time 112, a secure communication scheme may be employed to prevent spoofing or the like. Operation for focusing a message will be described below.

Furthermore, the data processing device 101 transmits read determination 113 which is determination information as to whether a user is finished reading the message 151 (whether the message 151 is in the read state). The data processing device 101 may transmit a message selection time required for the selection of the message 151 by the remote controller operation, as well as transmitting the read determination 113. Moreover, the data processing device 101 transmits the terminal ID which is information whereby the own data processing device 101 is identifiable, as well as transmitting the read determination 113. Since the data processing device 101 transmits the terminal ID when transmitting the read determination 113, a secure communication scheme may be employed to prevent spoofing or the like. Operation for determining whether the message 151 has been read and operation for selecting the message 151 will be described below.

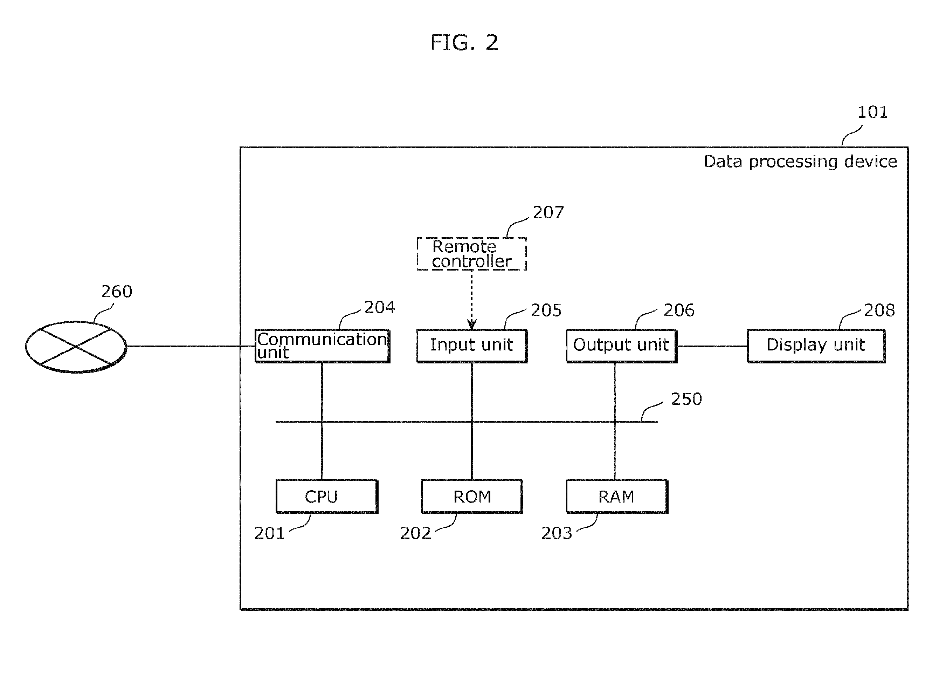

FIG. 2 is a hardware block diagram showing example hardware configuration of the data processing device 101.

The data processing device 101 includes a central processing unit (CPU) 201, a read only memory (ROM) 202, a random access memory (RAM) 203, a communication unit 204, an input unit 205, an output unit 206, and a bus line 250.

The CPU 201 is connected to the bus line 250. The CPU 201 executes a program stored in the ROM 202 or the RAM 203 to control the ROM 202, the RAM 203, the communication unit 204, the input unit 205, and the output unit 206, thereby implementing various functions. For example, the CPU 201 implements a function of decoding a communication message acquired from a communication network 260 and outputting the decoded message to a display unit 208.

The ROM 202 is connected to the bus line 250. The ROM 202 stores a program that defines the operation of the CPU 201, and data to be utilized by the CPU 201.

The RAM 203 is connected to the bus line 250. The RAM 203 temporarily stores data that occurs with the CPU 201 executing the program. Moreover, the RAM 203 temporarily stores data received or to be transmitted by the communication unit 204.

The output unit 206 is connected to the bus line 250 and the display unit 208. The output unit 206 is controlled by the CPU 201 and outputs data for displaying a text or an image on the display unit 208.

The input unit 205 is connected to the bus line 250. The input unit 205 is controlled by the CPU 201, and has a function of receiving operational commands from a user which are wirelessly transmitted from a remote controller 207, and transmitting the received operational commands to the CPU 201. It should be noted that, not limiting to the operational commands from the remote controller 207, the input unit 205 may receive a tapping action using a user's finger (including an object operated by the user) or operational commands via a mouse.

The communication unit 204 is connected to the bus line 250 and the communication network 260. The communication unit 204 is controlled by the CPU 201, and has a function of transmitting/receiving data to/from external communication equipment via the communication network 260.

Here, the communication network 260 is implemented in an optical communication line, a telephone line, or radio link, and connected to external communication equipment, the Internet, or the like.

The data processing device 101 implemented in the above-described hardware implements various functions by the CPU 201 executing a program stored in the ROM 202 or the RAM 203 and controlling the ROM 202, the RAM 203, the communication unit 204, the input unit 205, and the output unit 206.

Hereinafter, the functional configuration of the data processing device 101 will be described with reference to the accompanying drawings.

### <Functional Configuration of Data Processing Device>

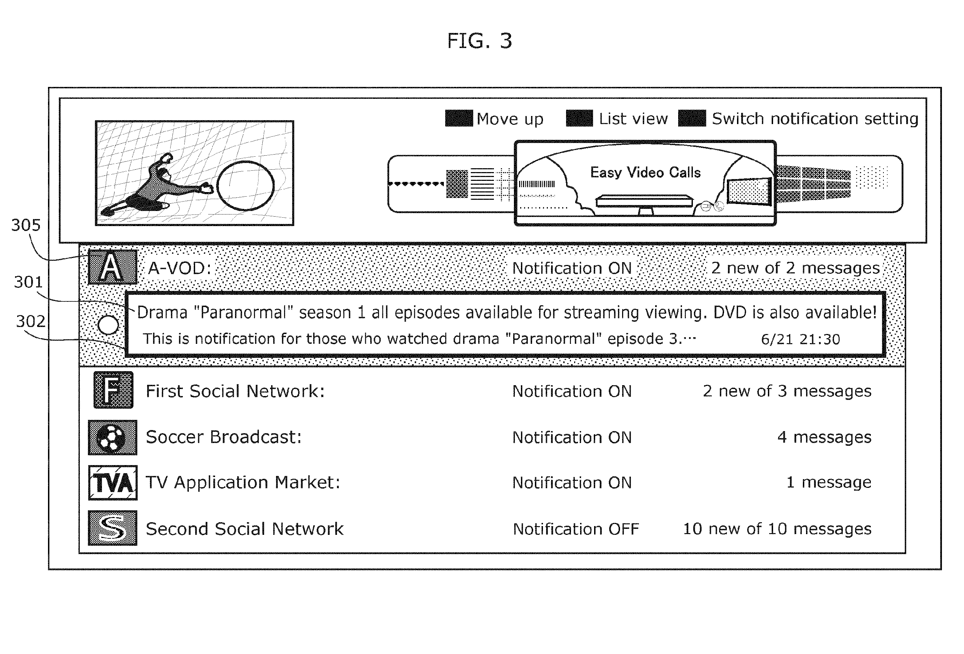

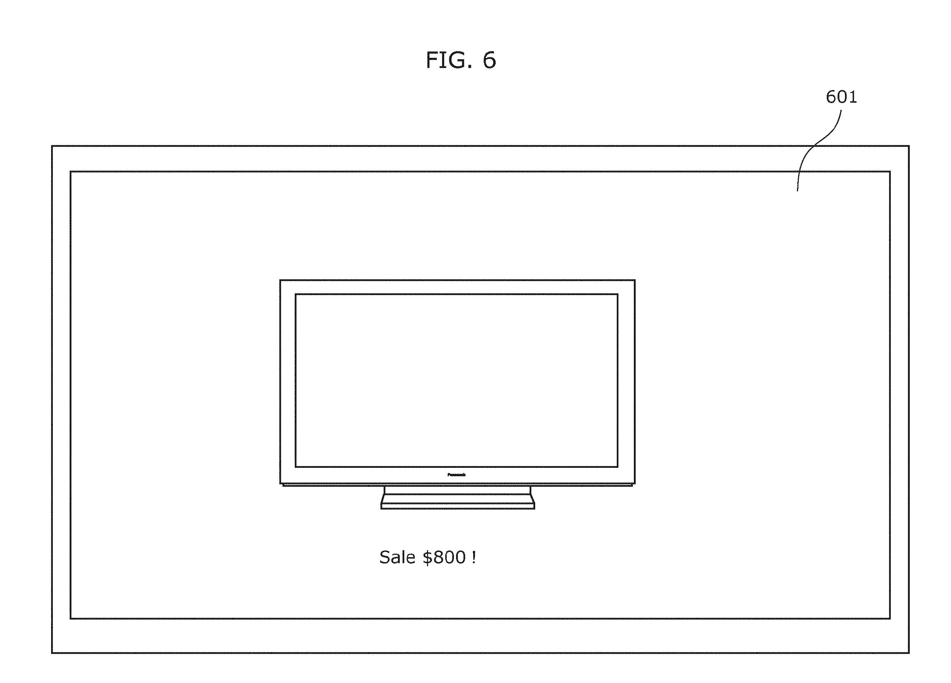

FIG. 3, FIG. 4, and FIG. 5 are diagrams showing examples of the message listing screens displayed by the data processing device. FIG. 6 shows an example of a message screen displayed by the data processing device. Messages are organized for each service provider providing the messages.

FIG. 3 is a diagram showing a first example of the message listing screen displayed by the data processing device.

FIG. 3 shows an example of the initial display of the message listing screen. An image 305 is for representing a service provider, and different for each service provider. Displayed immediately below the image 305 is a message 301 from the service provider. It should be noted that the message 301 may not be displayed immediately below the image 305, and may be laid out, so that the correspondence between the service provider and the message is identifiable. In the present embodiment, a plurality of images representing service providers is displayed and one message is displayed. Such display can specify a message currently being viewed by the user, and eliminate the inconvenience in which a large number of messages are displayed. If unread message which is a message unread by the user is displayed as the message 301 is displayed, the inconvenience is further eliminated. Then, the message 301 is indicated by a focus 302 which receives remote controller operation. The user can use the remote controller operation to switch messages, starting from the message 301 indicated by the focus 302.

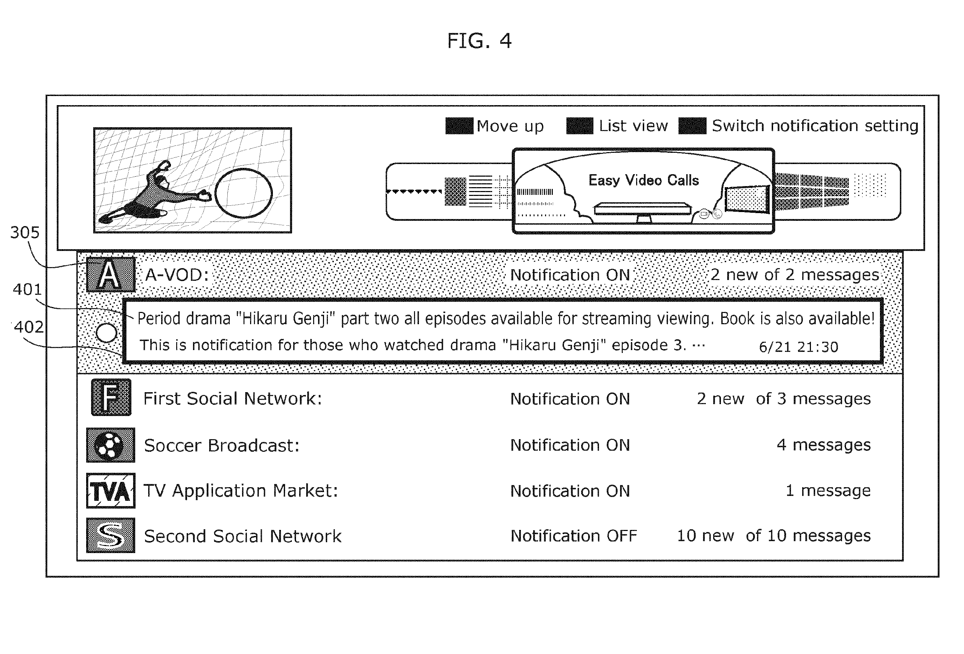

FIG. 4 is a diagram showing a second example of the message listing screen displayed by the data processing device.

FIG. 4 shows message switching using the remote controller operation, by way of example. Once the user depresses either the left or right key of the remote controller, a message switches to another message 401 from the same service provider. According to the display switching, a focus 402 indicates the other message 401. It should be noted that the message switching may be performed by depressing another key, not limited to either the left or right key of the remote controller. When unread message is preferentially displayed by switching the messages one by one using the remote controller operation, the inconvenience to the user is eliminated.

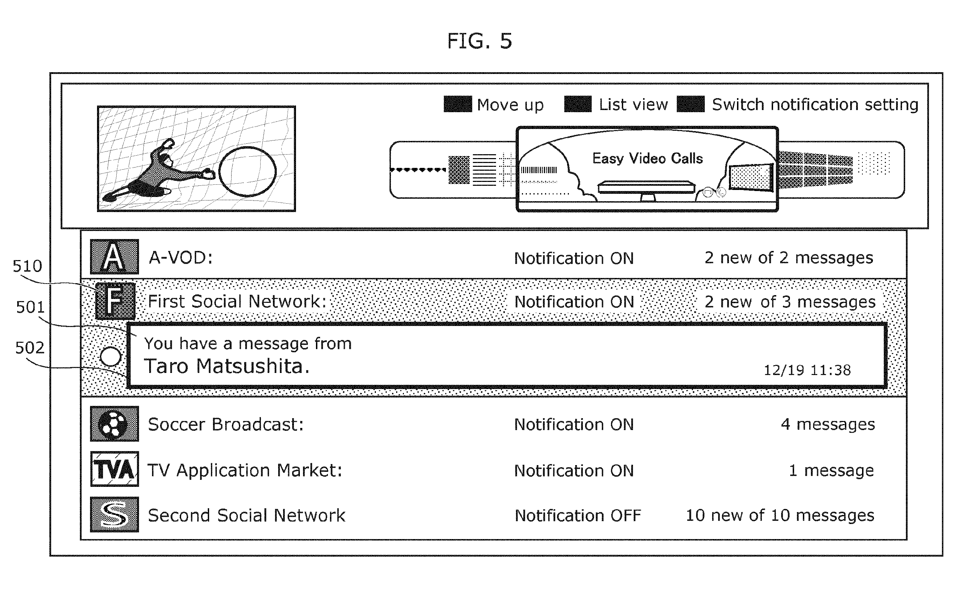

FIG. 5 is a diagram showing a third example of the message listing screen displayed by the data processing device.

FIG. 5 shows service provider switching using the remote controller operation, by way of example. Once the user depresses either the up or down key of the remote controller, a message switches to a message 501 from another service provider. The message 501 is displayed immediately below an image 510 from the other service provider, so that it is known that the display has changed to the message from the other service provider. According to the display switching, a focus 502 indicates the message 501. It should be noted that the service provider switching may be performed by depressing another key, not limited to either the up or down key of the remote controller.

FIG. 6 is a diagram showing an example of a message screen displayed by the data processing device.

FIG. 6 shows an example of the message screen when a message is selected by the remote controller operation. When a determination key of the remote controller is depressed while the message is being indicated by the focus, the message screen transitions to a message screen 601 showing services corresponding to the message. For example, if the selected message is an advertizing message for a TV program, it is conceivable that the message screen transitions to a message screen showing detailed sales information of the TV program. It should be noted that the message selection may be made by depressing another key, not limited to the determination key of the remote controller.

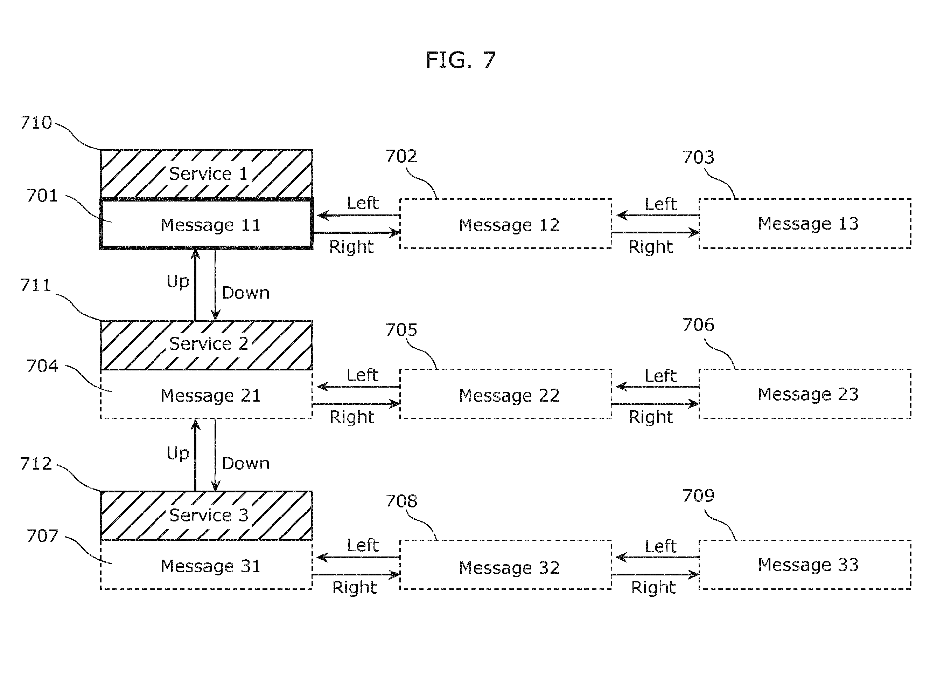

FIG. 7 is a diagram logically showing a message display switch on the message list screen displayed by the data processing device. Starting from a message 701, of an image 710 representing a service provider 1, which is initially displayed, the user switches displayed messages by either the top, down, left, or right key of the remote controller, and applications are switched therebetween by either the up or down key. Messages 702, 703, 704, 705, 706, 707, 708, and 709 are, while not initially displayed, displayed by the remote controller operation. When service providers are switched therebetween, the data processing device 101 displays a displayed message in a manner that a user can know that the displayed message belongs to a service provider switched to. For example, the data processing device 101 displays the message 704 immediately below an image 711 representing the service provider 2 switched to.

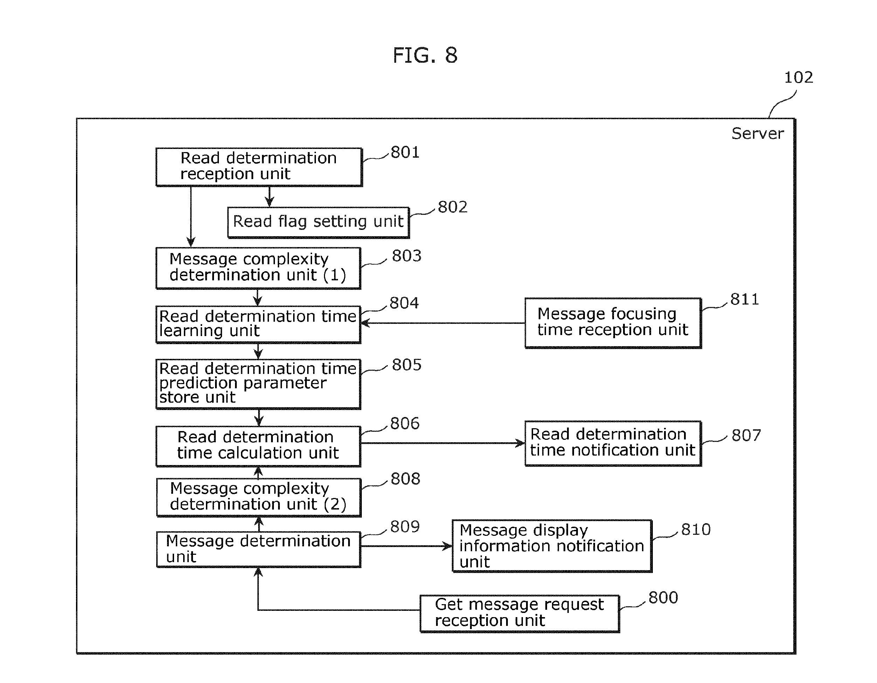

FIG. 8 is a functional block diagram showing the functional block configuration of the server 102 in the data processing system.

As shown in FIG. 8, the server 102 includes a get message request reception unit 800, a read determination reception unit 801, a read flag setting unit 802, a message complexity determination unit (1) 803, a read determination time learning unit 804, a read determination time prediction parameter store unit 805, a read determination time calculation unit 806, a read determination time notification unit 807, a message complexity determination unit (2) 808, a message determination unit 809, a message display information notification unit 810, and a message focusing time reception unit 811.

The get message request reception unit 800 receives the get message request 111 and the terminal ID which are transmitted from the data processing device 101, and using a method described below, creates message data to be transmitted to the data processing device 101.

The terminal ID is for identifying a device and unique for each device. Alternatively, a user ID for identifying a user may be used instead of terminal ID. Examples of a method of obtaining the user ID include a method in which a login screen is presented to the user and the user ID is obtained from a character string inputted by the user as input to the login screen.

The read determination reception unit 801 receives the read determination 113, the message selection time, and the terminal ID which are transmitted from the data processing device 101, and passes a message on which the read determination 113 is made and the terminal ID to the read flag setting unit 802 and the message complexity determination unit (1) 803. The read determination reception unit 801 may pass a message ID for identifying a message instead of the message, which is likewise in the subsequent processing. If the message selection time is not transmitted to the read determination reception unit 801, the read determination reception unit 801 may not pass the above information to the message complexity determination unit (1) 803.

The read flag setting unit 802 sets the read flag to 1 with respect to the message having the terminal ID. The read flag being set to 1 represents that the user is finished reading the message (the message is in the read state). It should be noted that an initial value of the read flag is 0.

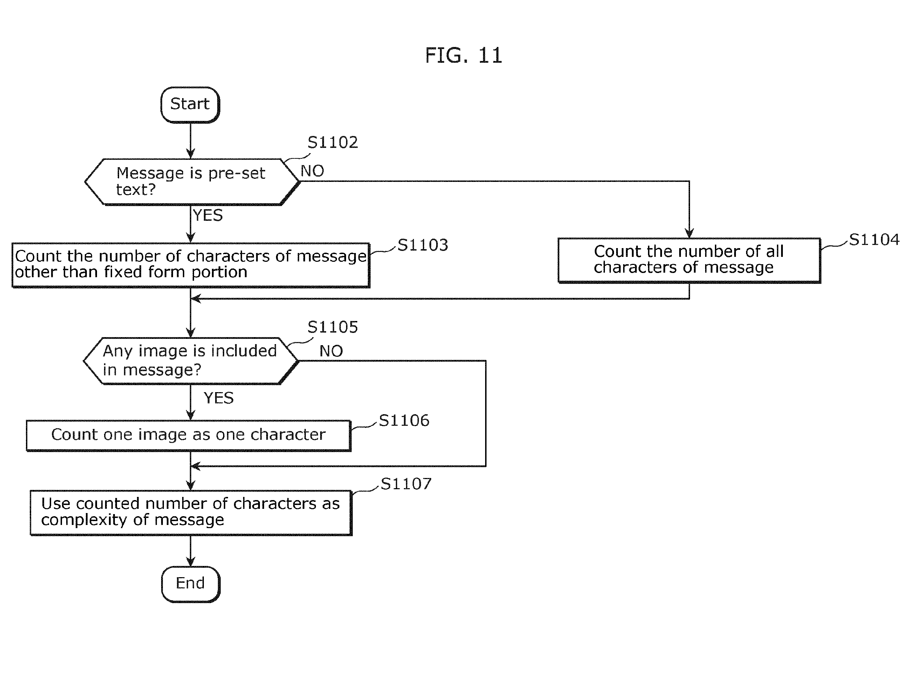

The message complexity determination unit (1) 803 calculates the complexity of the message, and passes the message, the complexity of the message, the message selection time, and the terminal ID to the read determination time learning unit 804. The complexity calculation algorithm is shown in FIG. 11.

The read determination time learning unit 804 learns, for each terminal ID, the relation of the message selection time to the complexity of the message (variation trend of the message selection time to the complexity of the message), and passes a result of the learning as a read determination time prediction parameter, together with the message, the complexity of the message, and the terminal ID, to the read determination time prediction parameter store unit 805. For the learning, for example, a statistical method by conventional technology may be employed, examples of which include linear regression analysis. By using the read determination time prediction parameter, the read determination time learning unit 804 can calculate, from the complexity of the message, prediction of a time which takes for each user (the terminal ID) to read a message (the read determination time (also referred to as the read estimation time)). For example, the read determination time learning unit 804 calculates a product of the complexity of the message and the read determination time prediction parameter as the read determination time.

The message determination unit 809 determines the get message request 111 to be transmitted from the data processing device 101 and a message (not shown) to be transmitted to the terminal ID, and passes the get message request 111 and the message to the message complexity determination unit (2) 808 and the message display information notification unit 810. An algorithm used by the message complexity determination unit (2) 808 to calculate the complexity of the message is the same as that used by the message complexity determination unit (1) 803.

The message complexity determination unit (2) 808 calculates the complexity of the message, and passes a message, the complexity of the message, and the terminal ID to the read determination time calculation unit 806.

The read determination time calculation unit 806 calculates the read determination time of the message from the complexity of the message received from the message complexity determination unit (2) 808 and the read determination time prediction parameter stored in the read determination time prediction parameter store unit 805, and passes the message, the read determination time, and the terminal ID to the read determination time notification unit 807.

When the read flag setting unit 802 sets the read flag of the message to 1, the read determination time notification unit 807 sets the read flag to 1, otherwise sets the read flag to 0, and transmits the message, the read flag, and the read determination time to the data processing device 101 identified by the terminal ID.

The message display information notification unit 810 notifies the data processing device 101 of the above information determined by the message determination unit 809. It should be noted that the read determination time notification unit 807 may double as the message display information notification unit 810.

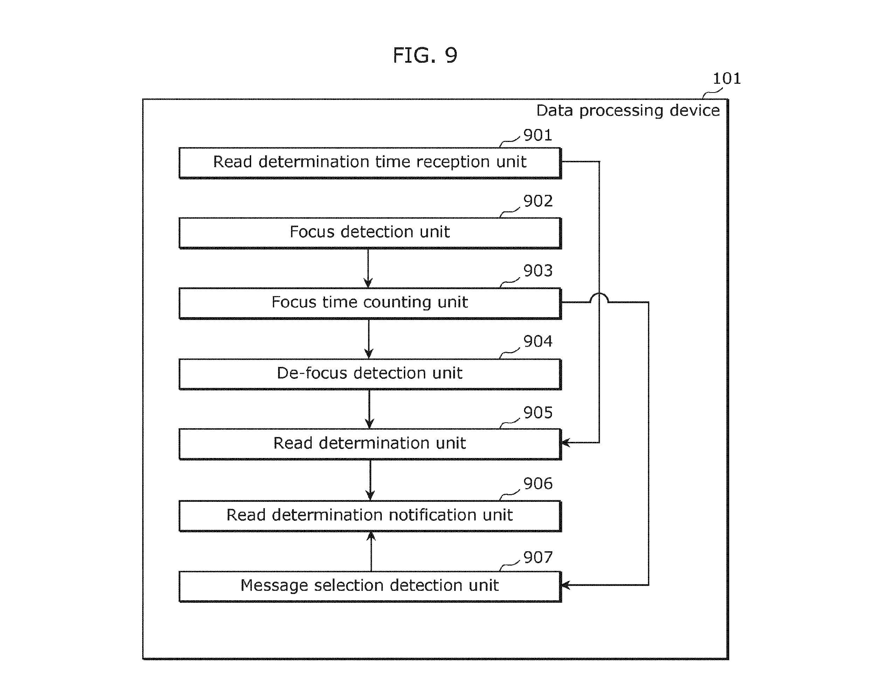

FIG. 9 is a functional block diagram showing the functional block configuration of the data processing device 101.

The function by the data processing device 101 for receiving a message and message display information, and displaying the message is conventional technology. Thus, the illustration will be omitted in the present embodiment.

A read determination time reception unit 901 receives the read determination time of the message from the server 102 and passes the read determination time to a read determination unit 905.

A focus detection unit 902 detects that a message is focused, and so notifies a focus time counting unit 903.

When received the notification from the focus detection unit 902, the focus time counting unit 903 counts the elapsed time since the message is focused as a focus time.

A de-focus detection unit 904 detects that the message is defocused, acquires the focus time at which time from the focus time counting unit 903, and passes the focus time to the read determination unit 905. It should be noted that the focus time may be passed together with the message and the terminal ID to the server 102.

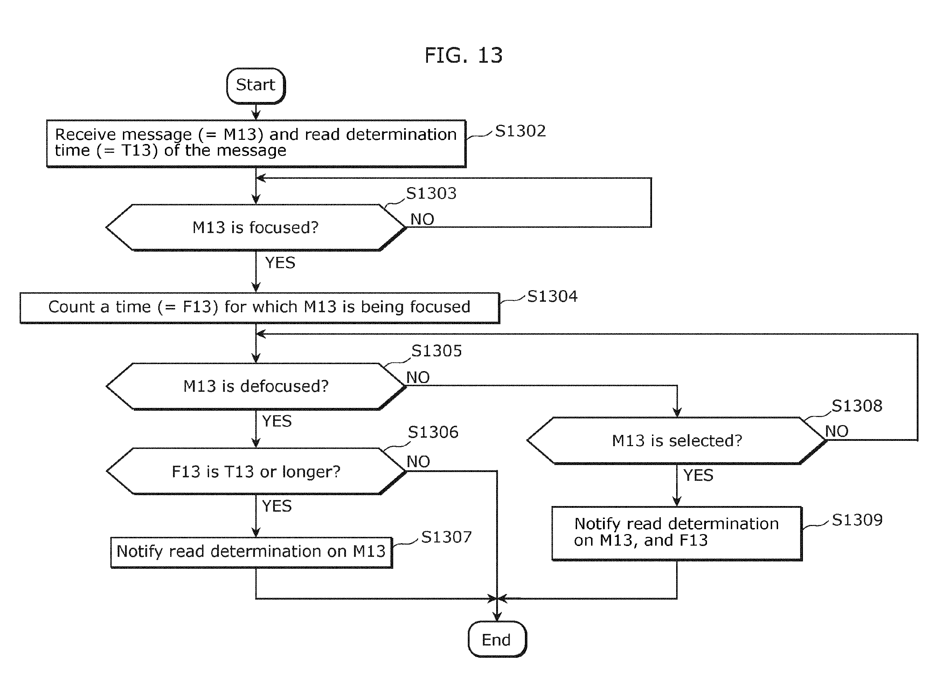

The read determination unit 905 performs the read determination on the message, based on the read determination time of the message received from the read determination time reception unit 901 and the focus time received from the de-focus detection unit 904. If it is determined that the message is in the read state, the read determination unit 905 passes the message to a read determination notification unit 906. The read determination algorithm is shown in FIG. 13.

A message selection detection unit 907 detects whether a message is selected, and if the message is selected, passes, to the read determination notification unit 906, a time for which the message is being selected after being focused as the message selection time, together with the message. It should be noted that the message selection time calculation method is the same as that used by the focus time counting unit 903 and thus the detailed description will be omitted.

When received the message from the read determination unit 905, the read determination notification unit 906 transmits the read determination 113 on the message and the terminal ID to the server 102. When received the message from the message selection detection unit 907, the read determination notification unit 906 transmits the read determination 113 on the message, the message selection time, and the terminal ID to the server 102. It should be noted that the read determination notification unit 906 may also transmit the complexity of the message.

While in the present embodiment, the read determination unit 905 is implemented in the data processing device 101, the read determination unit 905 may be implemented in the server 102 instead. In other words, the read determination on a message may be made by the server 102 by the de-focus detection unit 904 passing the focus time to the server 102, and executing the read determination unit 905 included in the server 102.

### [1-2. Operation]

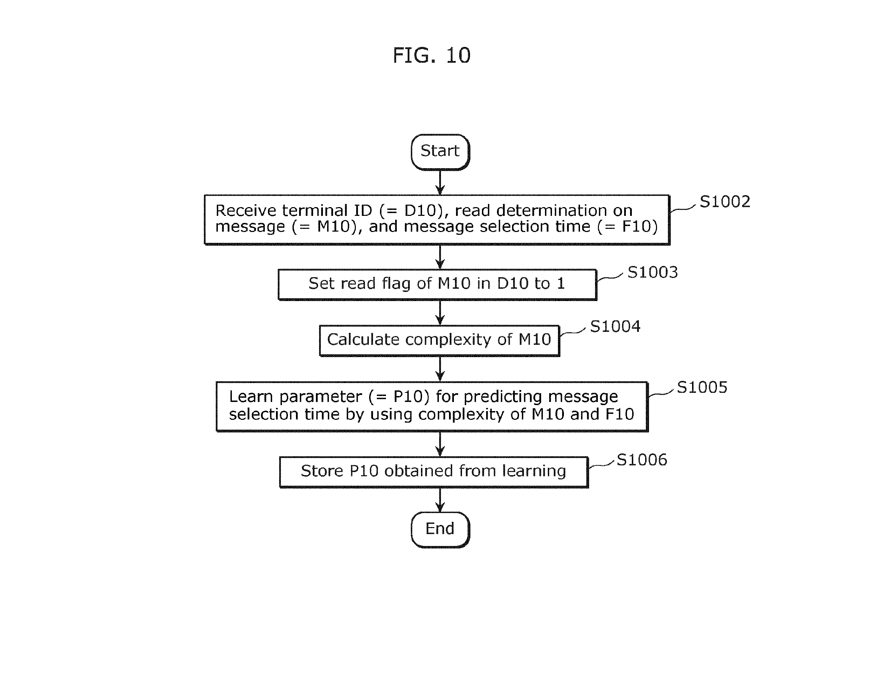

FIGS. 10, 11, and FIG. 12 are flowcharts each illustrating an algorithm (processing) of the server 102 to transmit a message to the data processing device 101.

FIG. 10 shows a flowchart of an algorithm of server operation which is executed by the read determination reception unit 801, the read flag setting unit 802, the message complexity determination unit (1) 803, the read determination time learning unit 804, and the read determination time prediction parameter store unit 805.

In step S1002, the read determination reception unit 801 receives the terminal ID (= D10), the read determination on a message (= M10), and the message selection time (= F10) which are transmitted from the data processing device 101.

In step S1003, the read flag setting unit 802 sets, to 1, the read flag of M10 in the data processing device 101 identified by D10. Because of the operation, M10 is recognized as a message which has been read by the user of the data processing device 101. The display priority level of the message recognized as read by the user may be, for example, downgraded when the message is displayed again.

In step S1004, the message complexity determination unit (1) 803 calculates the complexity of M10. Details of the algorithm are shown in FIG. 11.

In step S1005, the read determination time learning unit 804 learns parameters (= P10) for predicting the message selection time, by using the complexity of M10 and F10. For learning, a statistical method by conventional technology may be employed, examples of which include linear regression analysis. For example, the read determination time learning unit 804 can predict the message selection time by using the complexity of the message, by a mathematical equation: the message selection time = aX + b (where X represents the complexity of the message). In this case, the read determination time learning unit 804 acquires several number of sets of the message selection time and the complexity of the message, and obtains and determines a and b of the above equation by a least square method as a parameter (= P10).

In step S1006, the read determination time prediction parameter store unit 805 stores P10 obtained from the learning. P10 is stored in a different area for a different terminal ID.

The algorithm ends after the above processing is performed.

It should be noted that the learning may be performed separately for each service provider. In that case, the server 102 holds information whereby a service provider to which the message belongs to is identifiable. The learned parameters are generated for each terminal ID and for each service provider.

FIG. 11 is a flowchart illustrating an algorithm executed by the message complexity determination unit (1) 803 and a message complexity determination unit (2) 804 to calculate the complexity of a message.

In step S1102, the message complexity determination unit (1) 803 and the message complexity determination unit (2) 804 determine whether the message is a pre-set text. The pre-set text is, for example, a message indicating that a message is arrived, such as "You have a message from Mr. Smith". In this case, a portion other than "Mr. Smith" remains the same (= a fixed form), and is hardly read by a user. Thus, a portion "Mr. Smith" provides relatively important information in the message.

If YES in step S1102, the message complexity determination unit (1) 803 and the message complexity determination unit (2) 804 count the number of characters of the message other than the fixed form portion in step S1103.

If NO in step S1102, the message complexity determination unit (1) 803 and the message complexity determination unit (2) 804 count the number of all characters of the message in step S1104.

In step S1105, the message complexity determination unit (1) 803 and the message complexity determination unit (2) 804 determine whether any image is included in the message.

If YES in step S1105, the message complexity determination unit (1) 803 and the message complexity determination unit (2) 804 count one image as one character in step S1106. In step S1107, the message complexity determination unit (1) 803 and the message complexity determination unit (2) 804 use the counted number of characters as the complexity of the message. It can be expected that an image is easy for a user to recognize than recognizing a text, and thus the image is counted as one character which is a minimum number of characters. While, here, an image is counted as one character, an image may be counted as a small number (for example, 2 or 3) as compared to the number of all characters of the message.

If NO in step S1105, the message complexity determination unit (1) 803 and the message complexity determination unit (2) 804 use the counted number of characters as the complexity of the message in step S1107.

The algorithm ends after the above processing is performed.

While the number of characters is counted to calculate the complexity of the message, the number of words may be counted. This is because a user recognizes a sentence word by word rather than character by character. Alternatively, if there is a plurality of images, the plurality of images may be collectively counted as one. Alternatively, the complexity of a message may be defined by counting (considering) information as to whether an image is included.

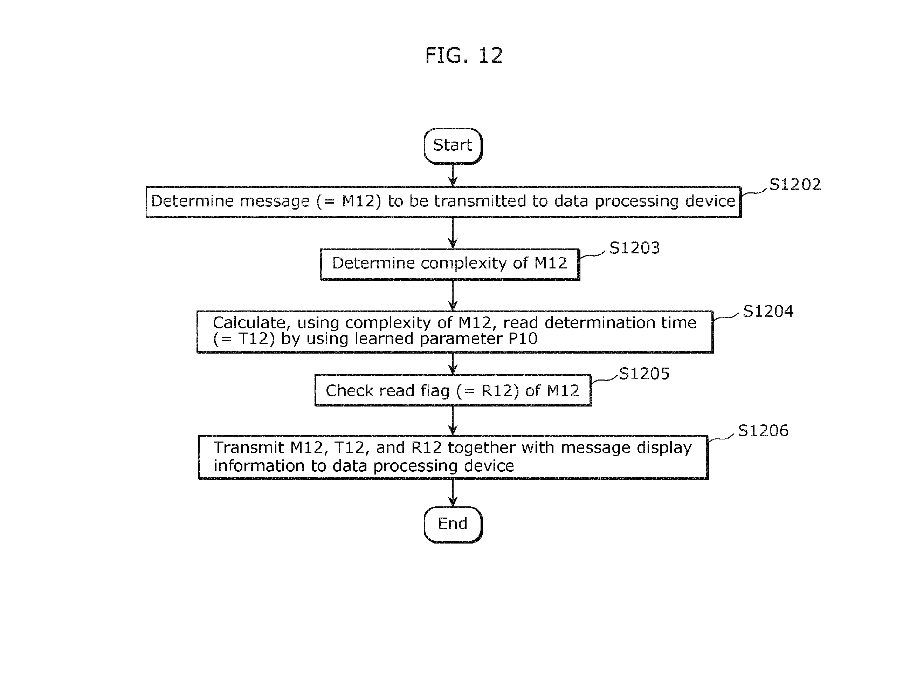

FIG. 12 shows a flowchart of an algorithm of server operation executed by the read determination time calculation unit 806, the read determination time notification unit 807, the message complexity determination unit (2) 808, the message determination unit 809, and the message display information notification unit 810.

In step S1202, the message determination unit 809 determines a message (= M12) to be transmitted to the data processing device 101.

In step S1203, the message complexity determination unit (2) 808 determines the complexity of M12. The complexity determination method follows the same algorithm as shown in FIG. 11.

In step S1204, based on the complexity of M12, the read determination time calculation unit 806 calculates the read determination time (= T12) by using the learned parameter P10. In the present embodiment, the read determination time = aX + b (where X represents the complexity of the message) can be calculated by using the parameters learned by using the algorithm of FIG. 10.

In step S1205, the read determination time notification unit 807 checks the read flag (= R12) of M12.

In step S1206, the read determination time notification unit 807 transmits M12, T12, and R12 together with the message display information to the data processing device 101.

This is the end of the algorithm.

It should be noted that the learning may not be performed. In that case, the read determination time is calculated by, for example, a product of the complexity of the message and a fixed value, such as multiplying the complexity of the message by 1 second.

FIG. 13 is a flowchart showing an algorithm used by the data processing device 101 to automatically determine whether a message has been read.

In step S1302, the read determination time reception unit 901 receives a message (= M13) and a read determination time (= T13) of the message.

In step S1303, the focus detection unit 902 determines whether M13 is focused.

If NO in step S1303, the focus detection unit 902 repeats S1303 until M13 is focused.

If YES in step S1303, the focus time counting unit 903 counts a time (= F13) for which M13 is being focused in step S1304.

In step S1305, the de-focus detection unit 904 determines whether M13 is defocused.

If YES in step S1305, the read determination unit 905 determines whether F13 is T13 or longer in step S1306. In other words, the read determination unit 905 determines whether a duration in which a message is being focused is the read determination time or longer.

If YES in step S1306, the read determination notification unit 906 notifies the server 102 of the read determination on M13 in step S1307.

If NO in step S1306, the algorithm ends.

If NO in step S1305, it is determined whether M13 is selected in step S1308.

If NO in step S1308, S1305 is repeated until M13 is defocused.

If YES in step S1308, the read determination notification unit 906 notifies the server 102 of the read determination on M13, and F13 as the message selection time in step S1309.

The algorithm ends after the above processing is performed.

If the data processing device 101 does not perform the learning, F13 is not notified to the server 102. Moreover, if the read determination time is not sent to the data processing device 101, the data processing device 101 may not perform the processes of S1306 and S1307. Moreover, it is determined in S1305 whether the message is defocused. When a screen showing the message is switched to another screen like screen transitions, which case may also be determined that the message is defocused.

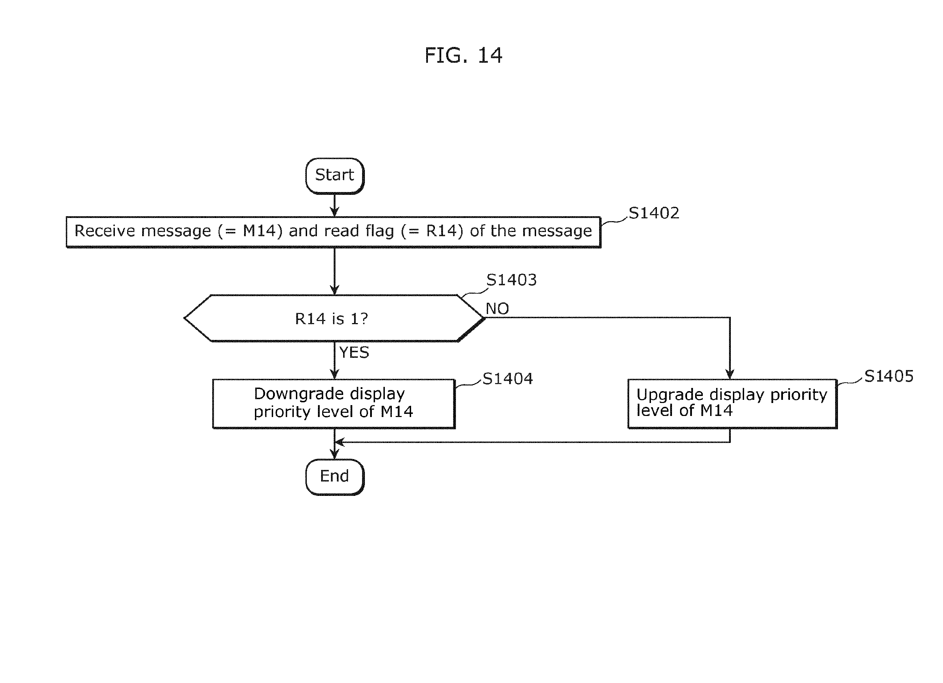

FIG. 14 is a flowchart illustrating an algorithm of operation of the data processing device 101 upon reception of a message and a read flag.

In step S1402, the data processing device 101 receives a message (= M14) and a read flag (= R14) of the message.

In step S1403, the data processing device 101 determines whether R14 is 1.

If YES in step S1403, the data processing device 101 downgrades the display priority level of M14 in step S1404. The display priority level corresponds to, for example, an order number in which a message is displayed. Messages are displayed in order such that a message having a highest display priority level is most likely displayed. In other words, a message having a highest display priority level is displayed by least remote controller operation. The display priority level can also be made correspond to, in addition to that mentioned previously, a font size or color. Specifically, a message having a highest display priority level may be displayed in a largest font, or a message having a display priority level higher than another message may be displayed in a color (for example, read) different from the other message.

If NO in step S1403, the data processing device 101 upgrades the display priority level of M14 in step S1405.

The algorithm ends after the above processing is performed.

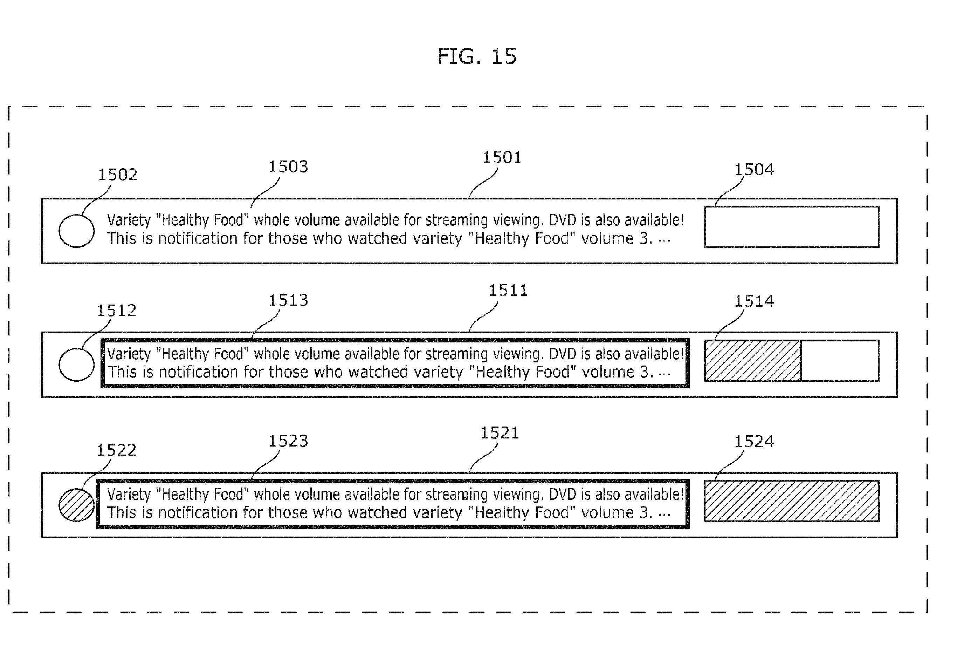

FIG. 15 is a diagram showing an example of message display by the data processing device 101.

An area 1501, an area 1511, and an area 1521 each represent an area in which one message is displayed.

A message body 1503, a "read indication" 1502 representing whether a message has been read, and a "focus bar" 1504 representing a duration in which a message is being focused are displayed in the area 1501. The area 1501 indicates a state in which a message has never been focused, and the read indication 1502 and the focus bar 1504 are not in color.

The area 1511 indicates a state in which a message is being focused. As indicated by the area 1511, once a message is focused, a portion of the focus bar 1514 is colored representing a percentage of the focus time to the read determination time. The coloring may be continuously varied according to the focus time. It should be noted that the focus bar 1514 may not be represented in a graphical format and may be in any format insofar as a user can know the percentage of the focus time to the read determination time.

The area 1521 indicates that the focus time for which a message is being focused has exceeded the read determination time, and the read indication 1522 is colored. This allows a user to intuitively understand that the message is in the read state. Additionally, the entirety of a focus bar 1524 is colored.

It should be noted that the read indication may not be provided. Any method may be used which allows a user to determine whether a message is in the read state or unread state, such as changing a font color of a message according to the read state and unread state. Moreover, when the message is focused again after being defocused, a time for which the message is being focused again may be added to the duration in which the message is being focused.

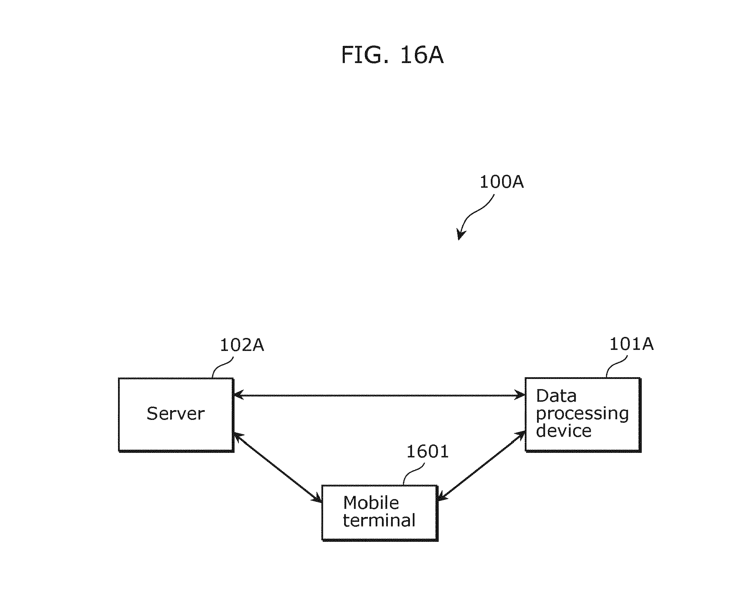

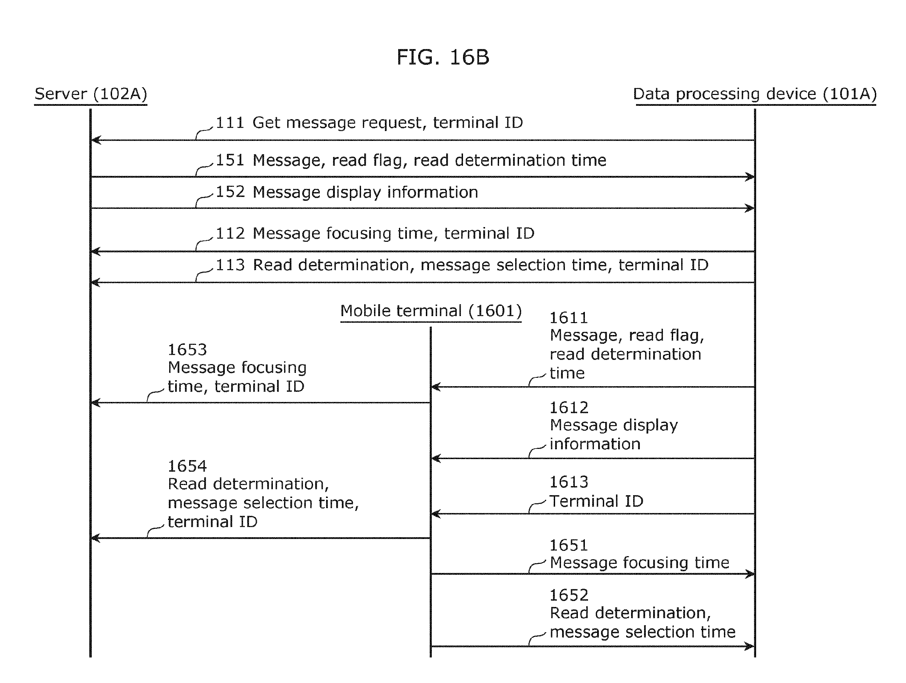

FIG. 16A is a diagram showing a second example (a data processing system 100A) of the configuration of the data processing system. FIG. 16B is a diagram illustrating processing between a server 102A, a data processing device 101A, and a mobile terminal 1601 in the second example of the data processing system.

Transmission and reception information items 111, 112, 113, 151, and 152 are the same as those shown in FIG. 1B. The mobile terminal 1601 has excellent portability. If the data processing device 101A is large in size such as TV and not well suited for movement, a user can view information on the data processing device 101A on the mobile terminal 1601 possessed by the user or operate the data processing device 101A by operation on the mobile terminal 1601, for example. Moreover, information items 1611 and 1612 are the same information items as 151 and 152, respectively, of FIG. 1B. The data processing device 101A sends information on message to the mobile terminal 1601 so that the message is viewed or the data processing device 101A is operated by using the mobile terminal 1601.

Furthermore, the mobile terminal 1601 may transmit the message focusing time, the read determination, and the message selection time directly to the server 102 or via the data processing device 101A. The data processing device 101A sends a terminal ID 1613 of the data processing device 101A to the mobile terminal 1601. Thus, the data processing device 101A on which operation is performed by using the mobile terminal 1601 is identifiable. In other words, the mobile terminal 1601 transmits, to the data processing device 101A, a message focusing time 1651, read determination, and a message selection time 1652 which are information on a message operated on the mobile terminal 1601. The data processing device 101A transmits the received information as 112 and 113 to the server 102A, and thus the operation performed on the message on the mobile terminal 1601 can be reflected in the server 102A. Alternatively, the message focusing time, the read determination, and the message selection time may be transmitted, likewise 1653 and 1654, directly from the mobile terminal 1601 to the server 102A, together with the terminal ID 1613 received from the data processing device 101A. Transmitting the terminal ID to the server 102A allows the server 102A to identify the data processing device 101A.

It should be noted that the mobile terminal 1601 may generate a terminal ID unique to the own terminal, and solely make a read determination on a message.

According to the data processing device of the present embodiment, the read determination on a message can be automatically made without a user manually giving indications that the message has been read.

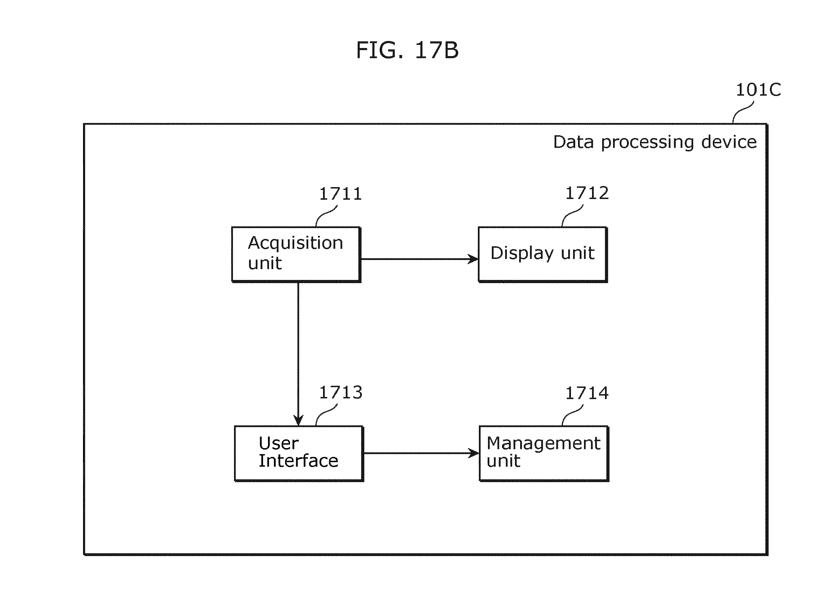

Components essential to the present disclosure will be described, with reference to FIG. 17B.

FIG. 17B is a functional block diagram showing another example configuration of the data processing device (a data processing device 101C).

As shown in FIG. 17B, the data processing device 101C includes an acquisition unit 1711, a display unit 1712, a user interface 1713, and a management unit 1714.

The acquisition unit 1711 acquires a message and a threshold amount of time for the message.

The display unit 1712 displays the message.

The user interface 1713 receives instructions for selection of the displayed message.

Once the threshold amount of time has elapsed since the message is displayed on the display unit 1712, the management unit 1714 manages the message as a read message, irrespective of whether the user interface 1713 has received the instructions for the selection.

### [1-3. Effects]

As described above, according to the data processing device of the present embodiment, the data processing device can manage, as a read message, a message a threshold amount of time, acquired together with the message, for which has elapsed since the message is displayed. Thus, the data processing device can properly determine whether the message is in the read state.

Moreover, the data processing device can manage, as a read message, a message a threshold amount of time for which has elapsed since the message is displayed. Here, the threshold amount of time is a value calculated from a property of the message acquired together with the message. Thus, the data processing device can properly determine whether the message is in the read state.

Based on a selection time from when a message is displayed to when a user selects the message via the user interface, the threshold amount of time which is acquired by the acquisition unit can be set. In other words, the threshold amount of time can be set based on a selection time dependent on the property of a message.

According to this, based on the selection time which is a time from when a message is displayed to when a user selects the message via the user interface, the threshold amount of time which is acquired by the acquisition unit can be set. Furthermore, the length of the selection time can be adjusted in accordance with the property of the message.

Moreover, the user can intuitively know a message determined as in the read state by the data processing device, based on a display mode of the message in the data processing device.

Moreover, the user can know, by the message display, a time until the message is determined to be in the read state by the data processing device.

Moreover, by using several number of correspondence between the message selection time and the message complexity, the data processing device can accurately obtain the read estimation time for a new message (a second message) having complexity that has not previously been received by the data processing device. In addition, the server performs a process for calculating the read estimation time for the new message, from the correspondence between the selection time and the complexity. Thus, processing load on the data processing device can be reduced.

Moreover, according to the data transmission device of the present embodiment, the data transmission device transmits to a terminal a message and the read estimation time for the message which can be used by the terminal to display the received message and set the state of the message to the read state when the read estimation time has elapsed since the message is displayed. Thus, the data transmission device can allow the terminal to properly determine whether the message is in the read state.

Moreover, by using several correspondences between the selection time and the message complexity, the data transmission device can accurately obtain the read estimation time for a new message which has complexity that has not previously been received by the data processing device. By transmitting the read estimation time to the terminal, the data transmission device can allow the terminal to properly determine whether the message is in the read state.

### <Supplementary>

Above, one embodiment of the data processing device according to the present invention has been described. However, the following variation is possible and the present invention is, of course, not limited to the data processing device as described with reference to the above embodiment.
(1) In the embodiment, a message may be displayed by directly designating an application by, for example, a tapping operation using a finger, rather than the remote controller.
(2) In the embodiment, the messages may be switched by a slide operation by a finger rather than the remote controller.
(3) In the embodiment, the server forcibly transmits a message to the data processing device. However, for example, if the data processing device accesses the server and thereby the server makes the read determination on a message before the server transmits the message to the data processing device, the server may not transmit the message to the data processing device.

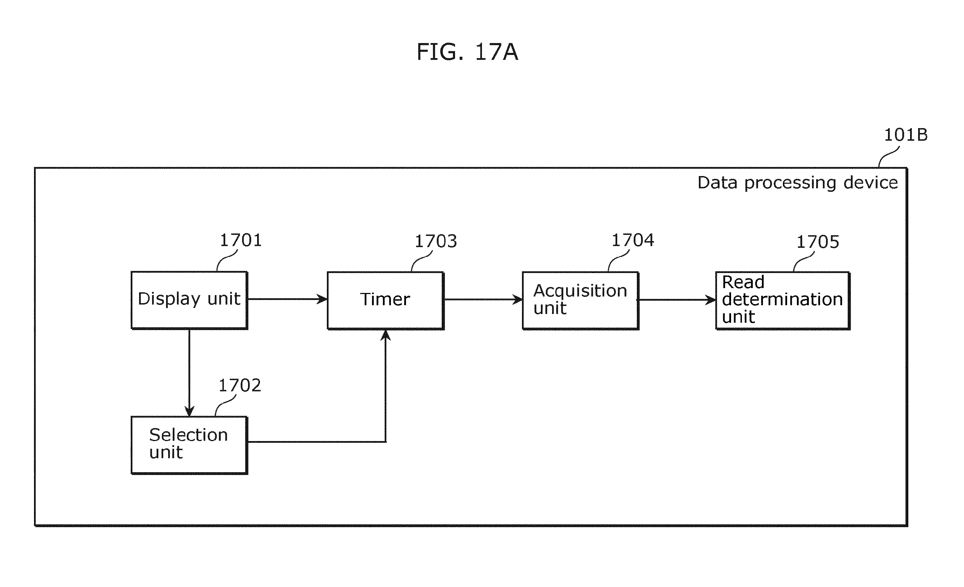

It should be noted that while the present disclosure can be described as below, the present disclosure is not limited thereto.
(1) A data processing device (FIG. 17A) which includes: a display unit which displays at least one message; a selection unit which selects a first message from among the at least one message displayed by the display unit; a time which counts a selection time which is a timer from when the first message is selectable by the display unit displaying the first message to when the selection unit selects the first message; an acquisition unit which acquires a read estimation time calculated based on the selection time of the first message counted by the timer; and a read determination unit which determines that the second message is in a read state when a time which has elapsed since the display unit displays the second message has exceeded the read estimation time when a second message which is a message corresponding to the read estimation time acquired by the acquisition unit is received.
(2) The data processing device described in (1) which further includes: a storage unit storing the selection time of the first message counted by the timer and identification information of the first message; and a read estimation information calculation unit which calculates read estimation information indicating correspondence between the selection time of the first message stored in the storage unit and complexity calculated based on the identification information of the first message, wherein the acquisition unit acquires the read estimation time, using the read estimation information calculated by the read estimation information calculation unit.

According to the data processing device described in (1), the data processing device can obtain a time (the read estimation time) from when a user views a new message (the second message) to when the user selects the new message, based on a time (the selection time) from when the user views a message (the first message) previously displayed to when the user selects the message. Thus, the data processing device can properly determine whether the message is in the read state.

Then, by, for example, displaying the second message a read estimation time for which has elapsed since the second message is displayed, in a display mode which allows the user that the second message is in the read state, or displaying the second message at a low display priority level, the user can readily view an unread message.

Moreover, according to the data processing device described in (2), using a time (the selection time) from when a user views a message previously displayed and to when the user selects the message and an amount of a portion the importance of which is high in the message (the complexity), a time (the read estimation time) from when the user views a new message (the second message) to when the user selects the new message can be obtained. By using the correspondence between the selection time and the complexity, the data processing device cab accurately obtain the read estimation time even if the new message has complexity that has not previously been received by the data processing device. Thus, the data processing device can properly determine whether the message is in the read state.

As the above, the embodiment has been described by way of example of the technology of the present disclosure. To this extent, the accompanying drawings and detailed description are provided.

Thus, the components set forth in the accompanying drawings and detailed description can include not only components essential to solve the problems but also components which are unnecessary to solve the problems for illustrating the above embodiments. Thus, those unnecessary components should not be acknowledged essential due to the mere fact that the unnecessary components are described in the accompanying drawings and the detailed description.

The above embodiment illustrates the technology of the present disclosure, and thus various modifications, permutations, additions, and omissions are possible in the scope of the appended claims and the equivalents thereof.

### [Industrial Applicability]

The data processing device according to the present disclosure is widely applicable to devices having data reception functions and read functions.

### [Reference Signs List]

100, 100A Data processing system
101, 101A, 101B, 101C Data processing device
102, 102A Server
201 CPU
202 ROM
203 RAM
204 Communication unit
205 Input unit
206 Output unit
207 Remote controller
208 Display unit
250 Bus line
260 Communication network
301, 401, 501 Message
302, 402, 502 Focus
305, 510, 710, 711, 712 Image
601 Message screen
701, 702, 703, 704, 705, 706, 707, 708, 709 Message
1501, 1511, 1521 Area
1502, 1512, 1522 Read indication
1503, 1513, 1523 Message body
1504, 1514, 1524 Focus bar
1601 Mobile terminal
1701, 1712 Display unit
1702 Selection unit
1703 Timer
1704, 1711 Acquisition unit
1705 Read determination unit
1713 User interface
1714 Management unit

## Claims

1. A data processing device comprising:
an acquisition unit configured to acquire a message and a threshold amount of time for the message;
a display unit configured to display the message;
a user interface which receives an instruction for selection of the displayed message; and
a management unit configured to manage the message as a read message, irrespective of whether the user interface has received the instruction for the selection, when the threshold amount of time has elapsed since the message is displayed on the display unit.

2. A data processing device comprising:
an acquisition unit configured to acquire a message and a property of the message;
a setting unit configured to set a threshold amount of time for the message, based on the acquired property;
a display unit configured to display the message;
a user interface which receives an instruction for selection of the displayed message; and
a management unit configured to manage the message as a read message, irrespective of whether the user interface has received the instruction for the selection, when the threshold amount of time has elapsed since the message is displayed on the display unit.

3. The data processing device according to Claim 1, further comprising:
a timer for counting, for each of a plurality of the messages having the property of a same type, a selection time which is a time from when the message is displayed on the display unit to when the message is selected by using the user interface; and
a transmission unit configured to transmit information on the counted selection time.

4. The data processing device according to Claim 2, further comprising:
a timer for counting, for each of a plurality of the messages having the property of a same type, a selection time which is a time from when the message is displayed on the display unit to when the message is selected by using the user interface; and
an adjustment unit configured to adjust a length of the threshold amount of time set by the setting unit, based on the counted selection time.

5. The data processing device according to any of Claims 1 to 4,
wherein the display unit is configured to display the message managed as the read message by the management unit in a display mode different from a display mode of a message other than the read message.

6. The data processing device according to any of Claims 1 to 5,
wherein the display unit is further configured to display a time which has elapsed since the display unit displays the message.

7. A data transmission device comprising:
a read estimation time calculation unit configured to calculate, as a read estimation time, based on complexity of a first message, an estimated time from when the first message is displayed to when the first message is in a read state; and
a transmission unit configured to transmit the read determination time calculated by the read estimation time calculation unit, and the first message.

8. The data transmission device according to Claim 7, further comprising:
a reception unit configured to receive identification information of a user, identification information of a second message, and a selection time which is a time from when the second message is displayed to when the second message is selected by the user,
wherein the read estimation time calculation unit is further configured to calculate, for each user, read estimation information indicating correspondence between the selection time received by the reception unit and complexity calculated based on the identification information of the second message, and based on the calculated read estimation information and the complexity of the first message, calculate the read estimation time for each user, and
the transmission unit is further configured to transmit the read estimation time calculated for each user by the read estimation time calculation unit and the first message.

9. A data processing system comprising:
the data transmission device according to Claim 7; and
a terminal,
the terminal including:
a reception unit configured to receive the read estimation time and the first message from the data transmission device;
a display unit configured to display the first message;
a timer for counting a time since the first message is selectable, by the display unit displaying the first message; and
a read determination unit configured to determine whether the first message is in a read state, based on whether a time which has elapsed since the display unit displays the first message has exceeded the read estimation time acquired by the acquisition unit

10. A data processing method comprising:
(a) acquiring a message and a threshold amount of time for the message;
(b) displaying the message;
(c) receiving an instruction for selection of the displayed message; and
(d) managing the message as a read message, irrespective of whether the instruction for the selection has been received in step (c), when the threshold amount of time has elapsed since the message is displayed in step (b).

11. A data transmission method comprising:
(a) calculating as a read estimation time an estimated time from when a first message is displayed to when the message is in a read state, based on complexity of the first message; and
(b) transmitting the read determination time calculated in step (a) and the first message.

12. A program for causing a computer to execute the data processing method according to Claim 10.

13. A program for causing a computer to execute the data processing method according to Claim 11.
